# EUROPÄISCHE PATENTSCHRIFT

(11) **EP 1 285 514 B1**
(45) Veröffentlichungstag und Bekanntmachung des Hinweises auf die Patenterteilung: **06.04.2005**
(21) Anmeldenummer: 00971398.3
(22) Anmeldetag: 26.10.2000
(51) Int. Cl.: H04L 29/06, G06F 1/00

(54) **VERFAHREN UND TRANSAKTIONSINTERFACE ZUM GESICHERTEN DATENAUSTAUSCH ZWISCHEN UNTERSCHEIDBAREN NETZEN**
METHOD AND TRANSACTION INTERFACE FOR SECURE DATA EXCHANGE BETWEEN DISTINGUISHABLE NETWORKS
PROCEDE ET INTERFACE DE TRANSACTION POUR L'ECHANGE DE DONNEES SECURISE ENTRE DES RESEAUX POUVANT ETRE DIFFERENCIES

(30) Priorität: 30.10.1999 DE 19952527
(43) Veröffentlichungstag der Anmeldung: 26.02.2003
(73) Patentinhaber: SAP AG, 69190 Walldorf (DE)
(72) Erfinder: SCHUSTER, Wolfgang, 76131 Karlsruhe (DE)
(74) Vertreter: Geitz Truckenmüller Lucht
(86) Internationale Anmeldenummer: PCT/EP2000/010568
(87) Internationale Veröffentlichungsnummer: WO 2001/033801

(56) Entgegenhaltungen:
- WO-A-00/70839
- US-A- 5 699 513
- US-A- 5 826 014

## Beschreibung

Die Erfindung betrifft ein Verfahren und Transaktionsinterface zum gesicherten Austausch zwischen unterscheidbaren Netzen, insbesondere zwischen einem externen und einem internen Netz, wie beispielsweise dem Internet und einem firmeneigenen Intranet.

Derartige Verfahren und Vorrichtungen zum gesicherten Austausch zwischen Netzen mit vorzugsweise unterschiedlichen Sicherheitsstandards gehören zum Stand der Technik.

Aus dem US- Patent Nr. 5,826,014 ist eine "Firewall" bekannt, mit der Elemente eines Netzwerks zwar dem öffentlichen Zugriff zugänglich, aber im übrigen gesichert sein sollen. Hierzu ist ein zusätzlicher "Stand Alone-omputer" zwischen dem öffentlichen und dem gesicherten Netzwerk vorgesehen, auf dem die Firewall läuft. Im Rahmen dieser vorbekannten Lösung erfolgt nach Überprüfung einer Legitimation aufgrund einer Anfrage von außen, - eines sogenannten "Requests" - ein Zugriff auf das gesicherte Netzwerk ausschließlich durch sogenannte Proxy-Agenten, also Software, des Stand-Alone Computers.

Hierdurch ist ein direkter Zugriff auf gesicherte Daten des Netzwerks wirksam ausgeschlossen. Das Merkmal einer vollständigen physikalischen Entkopplung zwischen der Anfrage und den gesicherten Daten stellt einen wesentlichen Beitrag zur Sicherheit des Netzwerkes dar. Ungelöst bleibt bei dieser Lösung das Problem, daß der Zugriff als solcher aufgrund einer Anfrage von außen konditioniert wird. Allein die Initiierung eines derartigen Zugriffs kann wenn sie . mißbräuchlich ausgelöst wurde, ein erhebliche Sicherheitslücke darstellen, wie beispielsweise durch die mißbräuchliche Initiierung eines an sich zulässigen Zugriffs in massenhafter Form, das sogenannte "bombing".

Die aus dem US Patent Nr. 5,826,014 vorbekannte Lösung sichert also den Zugriff als solchen gegen Mißbrauch, aber nicht die Initiative des Zugriffs.

Ferner gehört es zum Stand der Technik, ein internes Datennetz vom externen Netz durch eine sogenannte gesicherte Schnittstelle zu trennen. Die gesicherte Schnittstelle umfaßt dabei im besten Falle einen externen und einen internen Server, die über eine Firewall miteinander in Datenverbindung stehen. Etwaig vom externen Server aufgenommene Kundenanfragen werden im externen Server verarbeitet und nach unterschiedlichen Sicherheitschecks über die Firewall an den internen Server gegeben, der schließlich auf die innerhalb des zu schützenden internen Netzes abgelegten Daten zugreift.

Die zwischen dem internen und externen Server befindliche Firewall soll dabei verhindern, daß von außen, insbesondere mißbräuchliche Transaktionen oder Veränderungen am geschützten Datenbestand des inneren Netzes möglich sind.

Die Firewall verhindert im Ergebnis, daß externe Kunden ohne entsprechende Berechtigung in eine Datenverbindung mit dem internen Netz treten und daß bei bestehender Datenverbindung unzulässige Daten, beispielsweise Virenprogramme durch die Firewall in das interne Netz eingespeist werden. Hierdurch werden zum Beispiel bei fehlender Berechtigung auch an sich zulässige wünschenswerte Kundendienstabfragen die interne Datentransaktionen erfordern, abgeblockt.

Eine übliche Lösung hierfür, besteht in der Öffnung eines zusätzlichen speziellen Kunden-Gateways, der einen entsprechenden Zugriff erlaubt. Dies hat wiederum den Nachteil, daß über dieses zwar besonders gesicherte Gateway nun doch Angriffe auf den internen Datenbestand möglich sind.

Eine andere Lösung beläßt alle etwaigen Kundenfragen auf dem externen Server und vermeidet somit etwaig unerwünschte gefährliche direkte Datenverbindungen nach außen. Nachteilig bei dieser Lösung ist aber, daß etwaig vertrauliche Kundendaten auf einem ungeschützten externen Server zwischengespeichert werden. Aus diesem Grund werden die Daten durch Spiegelung häufig abgeglichen. Dies wird infolge der dadurch wachsenden Datenmenge mit einer erhöhten Prozessorleistung bzw. einem schlechteren Zeitverhalten bezahlt. Außerdem ist bei dieser Lösung ein Zugriff in Echtzeit auf den geschützten Datenbestand des internen Netzes kaum möglich.

Aus der internationalen Anmeldung WO 97/19611 ist zur Lösung dieser Probleme ein sogenanntes "Securite-Gateway-Interface" (SGI) bekannt, das die beschriebenen Probleme dadurch zu lösen versucht, daß aufgrund einer Kundenanfrage zunächst eine Authentikation des Kunden erfolgt und im Falle einer entsprechende Berechtigung des Kunden generiert der externe Server dann anhand der Kundenabfrage eine eigene zulässige Abfrage. Hierdurch ist eine echte Entkopplung zwischen den vom Kunden übermittelten Daten und schließlich zur Weiterbearbeitung vorgesehenen Daten gegeben. Die vom externen Server generierte Anfrage wird schließlich über die Firewall an einen internen Server in unter Abwicklung weiterer Sicherheitsroutinen weitergeleitet und schließlich im internen Netz bearbeitet und über den externen Server eine Antwort an den Nutzer übermittelt. Dieses System stellt somit eine vollständige Entkopplung von internen und externen Netzen sicher. Ungelöst bleibt allerdings das Problem, daß weiterhin vertrauliche Nutzerdaten weitgehend ungeschützt gegen einen Zugriff von außen auf dem externen Server liegen. Falls ein darauf mißbräuchlicher Zugriff auf den äußeren ungeschützten Server gelingt, können hier etwaig nicht zulässige Abfragen durch entsprechend geschickte Manipulation erzeugt werden. Dies ist insbesondere deshalb möglich, weil zwangsläufig die Authentikation der Nutzerabfrage auf dem externen Server erfolgt und somit in dem weitestgehend ungesicherten Bereich des Systems.

Der Erfindung liegt daher die Aufgabe zugrunde, ein Verfahren und eine Vorrichtung zum gesicherten Datenaustausch zwischen unterscheidbaren Netzen zu schaffen, daß eine vollständige Entkopplung der beiden Netze sicherstellt und überdies die erwähnten Nachteile des vorbekannten Standes der Technik vermeidet.

Diese Aufgabe wird durch ein Verfahren zum gesicherten Datenaustausch gemäß Anspruch 1 und ein Transaktionsinterface gemäß Anspruch 10 gelöst.

Dadurch, daß im Unterschied zum Stand der Technik, sämtliche Abfragen externer Nutzer von einem Schnittstellenserver aufbereitet und in definierter Form in einem Schnittstellenspeicher zwischengespeichert werden, die vollständige Bearbeitung dieser Abfragen einschließlich der Authentikation des Nutzers aber innerhalb des gesicherten internen Netzes erfolgt ist keinerlei Zugriff von außen auf sicherheitsrelevante Datenbereiche des internen Netzes möglich.

Vorteilhafte Weiterbildungen der Erfindung ergeben sich aus den Unteransprüchen 2 bis 9.

Gemäß Anspruch 2 wird die im Schnittstellenspeicher angelegte Warteschlange ausschließlich vom inneren Server in einer definierten Frequenz abgefragt. Es ist demnach nicht möglich, aktiv von einem externen Netz aus irgendeine Datentransaktion im inneren Netz auszulösen, da sämtliche Aktionen vom gesicherten Bereich des inneren Netzes ausgehen und auch von hier initiiert werden und schließlich vollständig hier abgewickelt werden. Hierzu zählt insbesondere auch die Authentikation des Nutzers.

Das Sicherheitslevel des Verfahrens kann durch Verwendung einer äußeren Firewall zwischen der neutralen Zone und dem vorgeschalteten externen Netz weiter gesteigert werden. Außerdem ist hierdurch der mißbräuchliche Zugriff auf in der neutralen Zone abgelegte Daten erschwert, auch wenn diese Daten an sich nicht sicherheitsrelevant sind.

In diesem Sinn wird eine weitere Steigerung des Sicherheitstandards durch Zwischenschaltung einer weiteren inneren Firewall zwischen der neutralen Zone und dem internen Netz erreicht. Die innere Firewall stellt auch einen wirksamen Schutz gegen die Spionage von innen, also den Zugriff vom internen Netz auf in der neutralen Zone abgelegten Nutzerdaten sicher.

Die innere Firewall erzwingt eine ausschließlich unindirektionale Kommunikation. Dabei werden Aufrufe grundsätzlich nur aus dem Bereich des internen Netzes akzeptiert. Ein Aufruf aus der neutralen Zone in den Bereich des gesicherten internen Netzes ist nicht möglich.

Die Nutzerabfragen können in unterschiedlichen Datenformaten eingehen. Hierzu kann es sinnvoll sein, in der neutralen Zone einen speziellen externen Server vorzusehen, der für bestimmte ausgewählte Datenformate zuständig ist und die hier eingehenden Nutzerabfragen vor der Weiterleitung an den eigentlichen Schnittstellenserver zunächst konvertiert und ggf. eine Eingangsbestätigung an den Nutzer übermittelt.

Dadurch, daß einmal in der Warteschlange des Schnittstellenspeichers aufgenommene Abfragen bis zu ihrer vollständigen Abarbeitung resistent zwischengespeichert werden, kann die Bearbeitung selbst nach einem vollständigen Systemabsturz im wesentlichen ohne Datenverlust wieder aufgenommen werden. Schlimmstenfalls muß die Bearbeitung der Abfrage wiederholt werden. Hierdurch ist das erfindungsgemäße Verfahren in höchstem Maße störsicher. Dies stellt sowohl eine Maßnahme der Datensicherheit als auch der Bedienerfreundlichkeit dar.

Ein weiteres Leistungsmerkmal des erfindungsgemäßen Verfahrens besteht darin, daß die Bearbeitungsgeschwindigkeit an die jeweilige Last angepaßt werden kann. Dies geschieht gemäß Anspruch 7 zum einen durch lastabhängige Frequenzsteuerung der Abfragen des Schnittstellenspeichers.

Dies kann aber auch mit Vorteil durch das Aktivieren von parallelen Prozessen innerhalb des Schnittstellenservers und/oder des inneren Servers erfolgen. Die Laststeuerung wird dabei mit von dem externen Server des Systems oder mittels eines Laststeuerungsmoduls der Firewall durchgeführt. Dies macht insoweit Sinn, weil die Laststeuerung hierdurch an Stellen angeordnet ist, die in Zugriffsrichtung vor dem Schnittstellenserver und/oder innerem Server liegen und somit die erforderlichen Prozessorkapazitäten bereitstellen können bevor sie benötigt werden. Hierdurch wird ebenfalls die Bedienfreundlichkeit des Systems erhöht.

Neben der softwaremäßigen Zuschaltung und Aktivierung weiterer Prozesse können auch zusätzliche Prozessoraktivitätten durch eine entsprechende Laststeuerung freigegeben oder gesperrt werden.

Die im Schnittstellenspeicher abgelegten Nutzerabfragen werden gemäß Anspruch 7 mit Vorteil verschlüsselt. Die Verschlüsselung dieser Abfragen erschwert den Zugriff von außen aber auch von innen auf etwaig vertrauliche Nutzerabfragen. Hierdurch wird ebenfalls sowohl der Spionage von außen als auch von innen vorgebeugt.

Ein vorteilhaftes Verschlüsselungsverfahren ist durch eine individuell vorbestimmbare Lebensdauer der jeweils eingesetzten Schlüssel gegeben. Dies bedeutet, daß selbst falls es einem mißbräuchlich Zugreifenden gelingen sollte, einen eingesetzten Schlüssel zu entschlüsseln, so ist hierdurch längst nicht sichergestellt, daß er einen erfolgreichen Mißbrauch oder gar eine Datentransaktion durchführen kann, da der mit der Schlüsselvergabe definierte Zeitkorridor so eng bemessen ist, daß eine mißbräuchliche Zweitverwendung des Schlüssels schon aufgrund seiner begrenzten Lebensdauer so gut wie ausgeschlossen erscheint.

Ein weiteres wesentliches Sicherheitssmerkmal des Verfahrens liegt darin, daß die Authentikation des jeweiligen Nutzers von der eigentlichen Bearbeitung getrennt erfolgt.

Entscheidend ist daß obwohl die Authentikation des Nutzers vollständig im gesicherten Bereich des internen Netzes vorgenommen wird, zu keinem Zeitpunkt das einem Nutzer jeweils zugeordnete Passwort von der neutralen Zone in das interne Netz oder in umgekehrter Richtung übermittelt wird.

Das Verfahren wird vorteilhaft mit einem Transaktionsinterface gemäß dem unabhängigen Anspruch 10 durchgeführt.

Vorteilhafte Weiterbildungen der erfindungsgemäßen Vorrichtung ergeben sich aus den Unteransprüchen 11 bis 15.

Das Sicherheitsniveau der erfindungsgemäßen Vorrichtung kann durch Verwendung einer inneren und/oder äußeren Firewall weiter erhöht werden.

Die Bedienfreundlichkeit und Anwendungsbreite des Transaktionsinterfaces kann durch einen zusätzlichen externen Server, der in der neutralen Zone angeordnet ist, erhöht sein. Eine dynamische Konfiguration des Transaktionsinterfaces durch ständiges, vorzugsweise periodisches, und vor allem selbsttätiges Überschreiben der Konfiguration aus dem gesicherten Bereich des internen Netzes stellt ein weiteres Sicherheitsmerkmal dar, da etwaig mißbräuchliche Manipulationen der Konfiguration durch einen unbefugten zugriff aus dem externen Netz, so allenfalls von kurzer Dauer sind und somit insbesondere die Gefahr einer "schleichenden" Infiltration ausgeräumt ist. Es hat sich erwiesen, daß sich langsam aufschaukelnde Eingriffe ein erheblich größeres Risiko darstellen als sofortige und massive Eingriffe, die ebenso schnell bemerkt und bekämpft werden können.

Aus dem gleicher Sicherheitsgedanken heraus ist auch das Überschreiben der statischen Dateninhalte der neutralen Zone in vorgebbaren Zeitabstaänden eine sinnvolle Weiterbildung der Erfindung.

Bei dem erfindungsgemäßen Transaktionsinterface kann zu einer besseren Lastanpassung auch der Schnittstellenspeicher selbst durch eine entsprechende Skalierung an die jeweilige Last angepaßt werden.

Ebenfalls einer besseren Lastansteuerung dient die Anordnung mehrerer Netzwerkrechner innerhalb der neutralen Zone.

Aus dem gleichen Grund können auch mehrerer Netzwerkrechner im Bereich des internen Netzes angeordnet sein.

Dadurch, daß das erfindungsgemäße Transaktionsinterface mit einer CORBA-Schnittstelle versehen ist, können im Bereich des internen Netzes unterschiedliche Betriebssysteme zusammenarbeiten und über das erfindungsgemäße Transaktionsinterface geschützt sein.

In besonders vorteilhafter Ausgestaltung ist das gesamte Transaktionsinterface mit einer durchgehenden CORBA-BUS-Architektur versehen.

Die Kommunikation innerhalb des Transaktionsinterface wird mit Vorteil verschlüsselt abgewickelt, vorzugsweise DESverschlüsselt.

Dadurch, daß vor der Bearbeitung entsprechender Nutzerabfragen eine Bestätigungsanfrage an den Nutzer übermittelt werden kann, ist das Transaktionsinterface zum korrekten Vertragsabschluß innerhalb des Internets in der Lage. Die hierdurch erlangte nochmalige Bestätigung der Nutzerabfrage oder des Vertrages stellt einen einwandfreien Vertragsschluß im Bereich des e-commerce sicher.

Der gesamte Betrieb des Transaktionsinterfaces wird mittels eines entsprechenden Logging-Moduls innerhalb eines sogenannten Logging-Protokolls aufgezeichnet. In diesem Logging-Protokoll sind sämtliche Transaktionen und Informationen, wie etwa die Verweildauer der jeweiligen Nutzerabfragen in der Warteschlange, die ID der Nutzer u.ä., verzeichnet.

Hierdurch ist es einem Administrator möglich, den Betrieb zu überwachen, etwaige Fehlfunktionen frühzeitig aufzuspüren und insbesondere etwaige Mißbrauchsversuche zu entdekken.

Die Erfindung wird nachstehend anhand eines oder mehrerer in der Zeichnung nur schematisch dargestellte Ausführungsbeispiele näher erläutert. Es zeigen:
- Fig. 1: ein Blockschaltbild zum Aufbau des Transaktionsinterfaces,
- Fig. 2: ein detailliertes Blockschaltbild des Transaktionsinterfaces,
- Fig. 3: ein Laufdiagramm zum Verfahren des gesicherten Datenaustausches und
- Fig. 4: ein Blockschaltbild zum Verfahrensablauf,

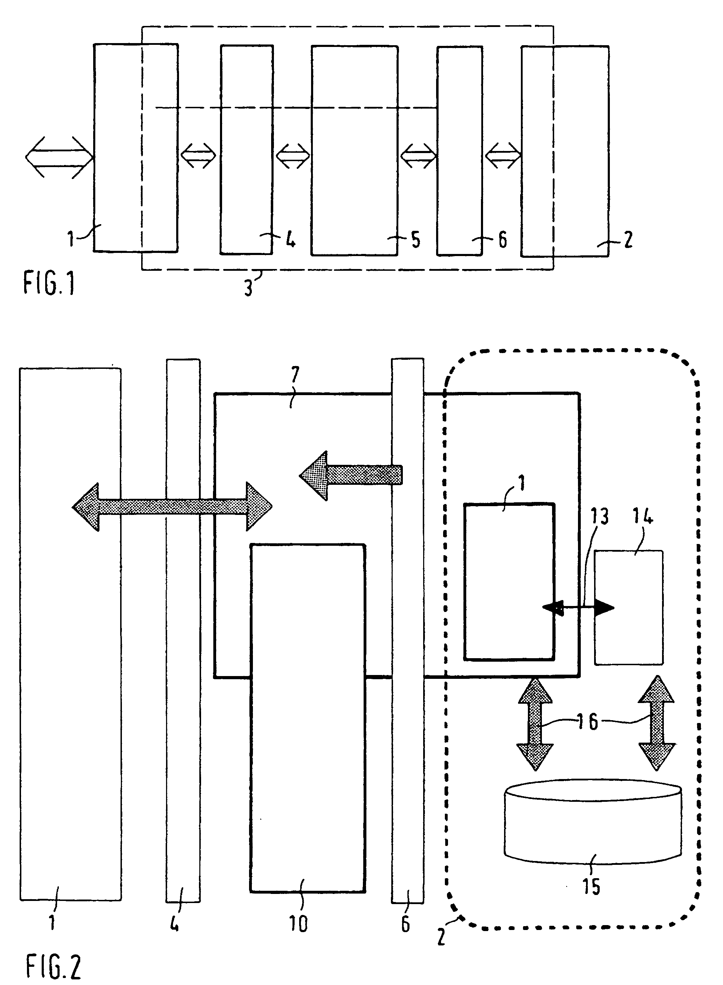

Fig. 1 zeigt ein externes Netz 1 und ein internes Netz 2, die über ein Transaktionsinterface 3 miteinander in Datenverbindung treten können.

Beim externen Netz 1 handelt es sich zumeist um das Internet, wobei als internes Netz 2 das Intranet eines Unternehmens, häufig ein LAN-Netzwerk, in Frage kommt. Das Transaktionsinterface 3 ist streng genommen nicht abgeschlossen zwischen beiden Netzen angeordnet.

Im Prinzip beginnt der gesicherte Datenaustausch bereits innerhalb des externen Netzes 1 und führt schließlich im Ergebnis zu Transaktionen innerhalb des internen Netzes 2, die anhand der gestrichelten Linie in Fig. 1 verdeutlicht werden soll.

Im übrigen weist das Transaktionsinterface 3 eine äußere Firewall 4 zur Abschottung einer neutralen Zone 5 gegenüber dem externen Netz 2 auf.

Die neutrale Zone 5 ist wiederum gegenüber dem internen Netz 2 durch eine weitere innere Firewall 6 abgeschottet. Die in Fig. 1 symbolisch dargestellten Pfeile symbolisieren nur die Wechselwirkung zwischen den gegeneinander abgegrenzten Bereichen und nicht etwa Datenflußrichtungen.

Wie sich aus der detaillierteren Darstellung in Fig. 2 ergibt, umfaßt die neutrale Zone 5 einen Schnittstellenserver 7 sowie einen externen Server 10. Beim externen Server 10 wird es sich in den allermeisten Fällen um einen üblichen Web-Server handeln. Darüber hinaus ist in der neutralen Zone ein Schnittstellenspeicher 11 vorzugsweise als Bestandteil des Schnittstellenservers 7 vorgesehen. Der Schnittstellenserver 7 steht über die innere Firewall 6 mit einem inneren Server 12, der bereits innerhalb des gesicherten Bereichs des internen Netzes 2 angeordnet ist, in Datenverbindung. Der innere Server 12 ist über eine CORBA-Schnittstelle 13 mit einem oder mehreren Netzservern 14 oder vorzugsweise verteilten Datenbankanwendungen 15 über einen CORBA-BUS 16 verbunden. Der CORBA-BUS 16 stellt ein offenes Bus-System dar, das sich dadurch auszeichnet, daß unterschiedlichste Systeme also auch unterschiedliche Betriebssysteme über diesen CORBA-BUS 16 miteinander kommunizieren können.

So können beispielsweise Unix- oder Windows-Betriebssysteme, Gebäudesteuerungssysteme oder Sun-Workstations über denselben CORBA-BUS 16 angesprochen werden.

Die genannte CORBA-Bus-Architektur wird in bevorzugter Ausführung für den gesamten Datenaustausch innerhalb des Transaktionsinterfaces 3 eingesetzt.

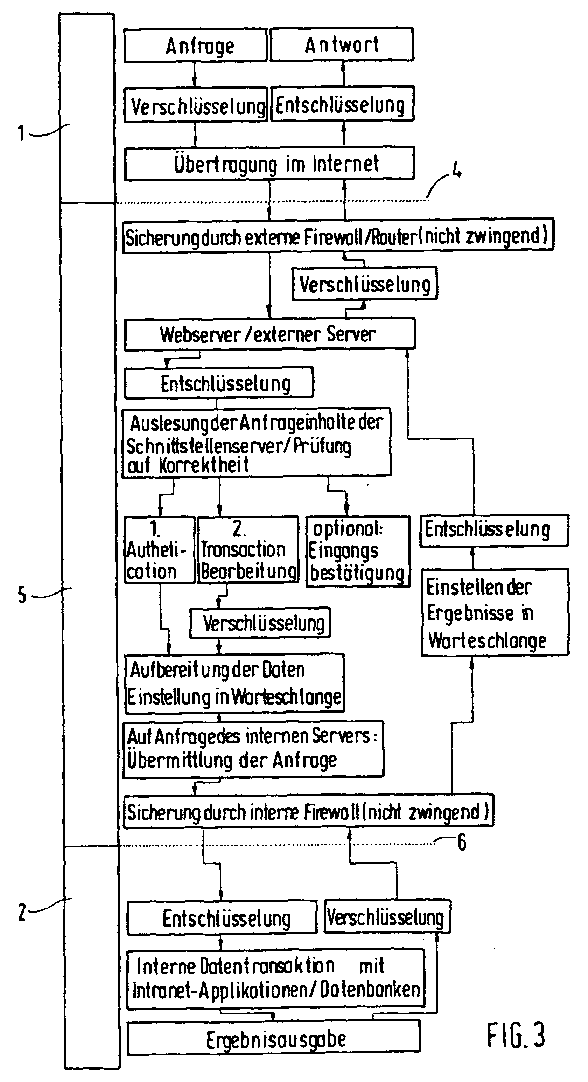

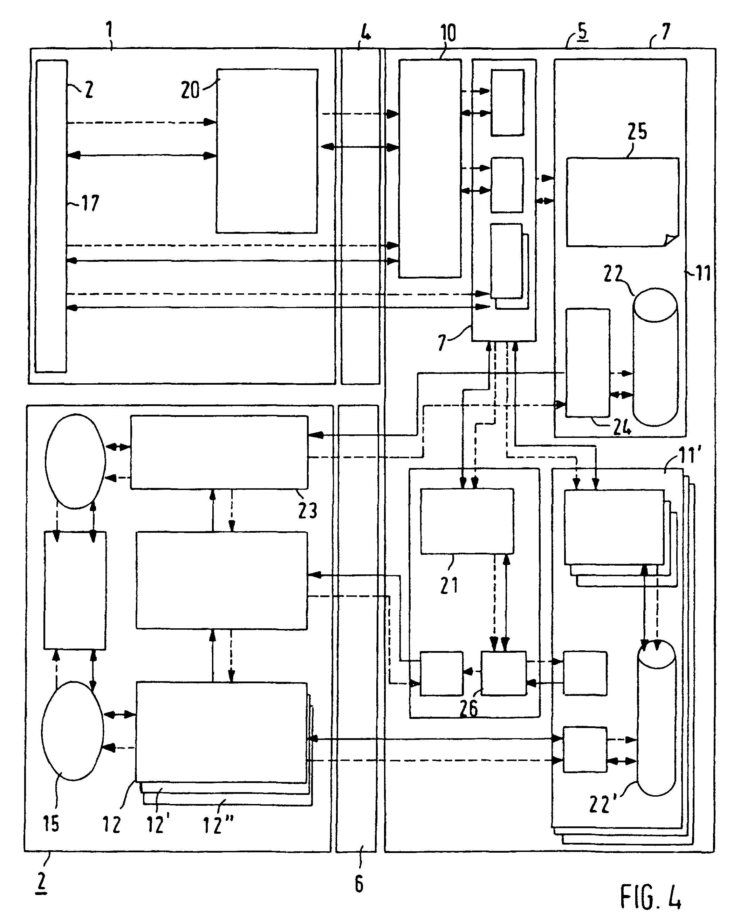

Der genaue Ablauf des Verfahrens zum gesicherten Datenaustausch aufgrund einer Nutzerabfrage, eines sogenannten Requestes, aus dem externen Netz 1 wird nachstehend ausführlich anhand Fig. 3 und 4 erläutert:

Ein externer Nutzer 17 kann sich über das HTP-Protokoll des Internet, beispielsweise ein HTML-Formular zum Datenaustausch mit dem internen Netz 2 beschaffen. Er hat dann Gelegenheit, seine Anfrage innerhalb dieses HTML-Formulares zu formulieren. Die Verwendung des HTML-Formulares ist notwendig, weil innerhalb des hier beschriebenen Verfahrens des gesicherten Datenaustausches nur vorbestimmte zulässige Datentransaktionen möglich sind. Insoweit ist durch die Verwendung von HTML-Formularen sichergestellt, daß auch nur diese vorbestimmten Abfragen von den externen Nutzern 17 formuliert werden. Das HTML-Formular wird dann über ein Client-Interface 20, beispielsweise eine Java-Konsole verschlüsselt durch das Internet übertragen und gelangt, sofern der externe Nutzer 17 über die entsprechenden Berechtigungen bzw. Paßworte verfügt, über eine externe Firewall 4 auf den externen Server 10, der innerhalb der neutralen Zone 5 angeordnet ist. Bei dem externen Server 10 handelt es sich im hier vorliegenden Falle um einen Web-Server. Das Transaktionsinterface 3 kann im Rahmen der Erfindung auch mit anderen Datenformaten, wie etwa RMI, in Datenverbindung treten. So kann der Austausch auch mittels älterer Browsertypen oder mit anderen Netzformaten aus dem Internet abgewickelt werden.

Derartige Abfragen werden dann nicht über den externen Server 10 abgewickelt, sondern gelangen direkt auf den Schnittstellenserver 7.

Dabei kann der Webserver 10 durchaus eine eigene Prozessoreinheit oder ein Modul des Schnittstellenservers 7 sein. Es muß sich dabei nicht unbedingt um eine abgeschlossene Rechnereinheit handeln. In dem in Fig. 4 dargestellten Ausführungsbeispiel besteht die neutrale Zone 5 im wesentlichen aus dem Schnittstellenserver 7, der eine ganze Reihe von Modulen aufweist.

Die gestrichelten Pfeillinien innerhalb von Fig. 4 stehen dabei für einen Aufruf, der eine Aktion an der aufgerufenen Stelle auslöst, und die durchgezogenen Pfeillinien für einen Datenfluß in Pfeilrichtung

Nach Eingang im Webserver 10 wird die aus dem Internet 2 empfangene Abfrage zunächst entschlüsselt ausgelesen und schließlich an den Schnittstellenserver 7 übermittelt. Der Schnittstellenserver 7 weist ein Begrüßungsmodul 21 zur selbsttätigen Bestätigung des Eingangs bzw. zur Begrüßung des Nutzers 17 aus. Vor allem anderen wird eine Eingangsbestätigung bzw. Begrüßung des externen Nutzers 17 über den Web-Server 10 und die äußere Firewall 4 an den Nutzer 17 zurückgegeben.

Je nach Abfrage ist zu diesem Zeitpunkt entschieden und dem Nutzer 17 mitgeteilt worden, ob eine synchrone oder asynchrone Bearbeitung der eingegangenen Abfrage erfolgt. Bei einer synchronen Bearbeitung erhält der externe Nutzer noch in derselben Online-Sitzung das Ergebnis seiner Abfrage.

Im Unterschied hierzu wird bei einer asynchronen Bearbeitung das Ergebnis erst in einer nächsten Online-Sitzung oder in einem gesonderten Vorgang an den externen Nutzer übermittelt. Die Entscheidung, ob eine synchrone oder asynchrone Bearbeitung erfolgt, richtet sich nach Mächtigkeit und Sicherheitsrelevanz der vom externen Nutzer 17 empfangenen Abfrage.

Der Schnittstellenserver 7 beginnt nun die empfangene Anfrage in unkritische Datenpakete zu zerlegen und in eine Warteschlange 22 bzw. 22'einzustellen, die in einem speziellen Schnittstellenspeicher 11 bzw. 11', der ebenfalls innerhalb der neutralen Zone 5 angeordnet ist.

Dabei wird zumindest in dem hier vorliegenden Ausführungsbeispiel zwischen einer Warteschlange 22 zur Authentikation des Nutzers 17 und einer Warteschlange 22' mit der eigentlichen Abfrage unterschieden. In der Regel wird es sich dabei um ein und dieselbe Warteschlange, jedoch unterscheidbare, Speicherbereiche handeln.

Eine herkömmliche Nutzerabfrage umfaßt u.a. auch die Nutzer ID und ein Passwort. Die Nutzer ID wird unter Verwendung des vom Nutzer 17 im Rahmen seiner Abfrage übermittelten Passwortes verschlüsselt in der Warteschlange 22 abgelegt.

Zur Authentikation des Nutzers 17 wird die jeweilige Nutzer ID auf Anfrage des inneren Servers 12 unter Überwindung der inneren Firewall 6, aber ansonsten unverschlüsselt, in den Bereich des internen Netzes 2 an ein Authentifikationsmodul 23 gegeben.

Innerhalb des Authentikationsmoduls 23 wird unter Verwendung des im Bereich des internen Netzes 2 zu der jeweiligen Nutzer-ID abgelegten Passwortes die Nutzer-ID verschlüsselt und über die innere Firewall 6 verschlüsselt in die neutrale Zone 5 zurückgegeben.

In der neutralen Zone 5 wird dann mittels eines in der neutralen Zone implementierten Authentikationsservices 24 des Schnittstellenservers 7 die jeweilige Nutzer-ID unter Verwendung des vom Nutzer 17 eingegebenen Passwortes entschlüsselt und die erhaltene Nutzer-ID mit der zwischengespeicherten Nutzer-ID verglichen.

Für den Fall, daß die beiden ID's übereinstimmen, wird die Bearbeitung fortgesetzt bzw. freigegeben, ansonsten erfolgt eine entsprechende Miteilung an den externen Nutzer 17.

Bevor die vom externen Nutzer 17 empfangene Abfrage in der entsprechend aufbereiteten Form in die Warteschlange 22' eingestellt wird, erfolgt eine Verifizierung der Abfrage. Es werden nur solche Datensätze in die Warteschlange eingestellt, die semantisch korrekt sind. Ansonsten wird die Bearbeitung abgebrochen und eine entsprechende Message über den Web-Server 10 an den externen Nutzer 17 abgegeben.

Darüber hinaus wird in der neutralen Zone 5 eine Bearbeitungsprotokoll 25 der aktuell laufenden Bearbeitungen geführt.

Die im Schnittstellenspeicher 11 angelegte Warteschlange 22' wird in regelmäßigen Abständen vom inneren Server 12 auf etwaig vorhandene und noch zu bearbeitende Abfragen geprüft.

Dies stellt sicher, daß unter keinen Umständen der Zugriff des externen Nutzers 17 irgendeine Aktivität innerhalb des geschützten internen Netzes 2 auslöst, sondern der Zugriff auf die in die Warteschlange 22' eingestellten Abfragen erfolgt vielmehr selbsttätig von seiten des internen Servers 12. Dies ist ein wesentlicher Aspekt, um etwaige Manipulationen zu verhindern.

Für den Fall, daß auf die vom inneren Server 12 veranlaßte Abfrage der Warteschlange 22' innerhalb der Warteschlange 22' noch abzuarbeitende Nutzerabfragen festgestellt werden, werden diese vom inneren Server 12 angefordert. Vor der Übermittlung der Anfrage an den inneren Server 12 erfolgt jedoch zunächst eine Verschlüsselung der Anfrage. Diese Verschlüsselung erfolgt nach dem Verfahren DES mit einer Schlüssellänge von 56 BIT. Selbstverständlich können auch andere Verschlüsselungsverfahren und Schlüssellängen eingesetzt werden. Die eingesetzten Schlüssel werden in einem Schlüsselmanagement überwacht und permanent verändert.

Die Verschlüsselung erfolgt mittels eines bei der Konfiguration des Systems erstellten Basisschlüssel, der eine asynchrone SSL-Verschlüsselung bewirkt. Im weiteren erfolgt dann unter Verwendung dieses Basisschlüssels eine synchrone DES-Verschlüsselung.

Insbesondere haben die eingesetzten Schlüssel nur eine individuell konfigurierbare Lebensdauer. Dies bedeutet, daß mit der Schlüsselvergabe ein schmaler Zeitkorridor zum gesicherten Datenaustausch eröffnet wird. nach Ablauf der Lebensdauer kann der Schlüssel, selbst wenn es einer unbefugten Person gelänge, ihn zu entschlüsseln, nicht mehr genutzt werden. Eine mißbräuchliche Zweitverwertung von Schlüsseln ist hierdurch nahezu ausgeschlossen.

Diese erneute Verschlüsselung der Abfrage vor der Übermittlung an den inneren Server 12 dient in erster Linie dazu, ein Hacking von innen also ein Abhören vertraulicher Nutzerabfragen im Bereich des geschützten inneren Netzes 2 zu vermeiden.

Hierdurch beugt das beschriebene Verfahren im gesicherten Datenaustausch zusätzlich einer Spionage von innen vor.Die derart verschlüsselte Abfrage wird erneut hinsichtlich der Struktur, Inhalt und den Feldinhalten überprüft.

Für den Fall, daß die nunmehr erzeugte Abfrage sich als nicht zulässig erweist, wird an dieser Stelle die Weiterbearbeitung abgebrochen und eine entsprechende Mitteilung an den externen Nutzer 17 übermittelt.

Für den Fall, daß die Abfrage weiter zulässig ist, also einer vorbestimmten Datenabfrage oder Transaktion entspricht, wird die betreffende Abfrage über die innere Firewall 6 des Transaktionsinterfaces 3 an den inneren Server 12 übermittelt. Die Datenbankabfrage kann je nach Sicherheitsrelevanz und Mächtigkeit auf einen oder mehreren Servern 12, 12'oder 12" unter Hinzuziehung von einer oder mehreren Datenbankanwendungen 15 abgearbeitet werden. Somit werden alle sicherheitsrelevanten Vorgänge im gesicherten Bereich des internen Netzes 2 abgewickelt.

Hierzu muß zunächst die am inneren Server 12 angelangte Abfrage vor der Weiterbearbeitung entschlüsselt werden.

Nach Bearbeitung der Anfrage erfolgt eine Ergebnisausgabe, die verschlüsselt über die innere Firewall 6 an den Schnittstellenserver 7 zurückgegeben wird. Der Schnittstellenserver 7 führt dann eine sogenannte "Matching-Kontrolle" durch; d.h. es wird überprüft, ob das im Bereich des internen Netzes 2 erzeugte Ergebnis mit der Nutzerabfrage im Einklang steht. Falls dies nicht der Fall ist, wird eine Fehlermeldung an den externen Nutzer 17 übermittelt.

Sollte dies der Fall sein, wird das Ergebnis an den Web-Server 10 übermittelt, in ein geeignetes Format umgesetzt und schließlich über die äußere Firewall 4 an das Internet 1 an den externen Nutzer 17 übertragen. Somit ist eine vollständige Datentransaktion unter Verwendung des erfindungsgemäßen Transaktionsinterfaces 3 beschrieben.

Das Transaktionsinterface 3 ist überdies mit einer dynamischen Laststeuerung versehen, die eine Anpassung des Transaktionsinterfaces 3 an den jeweiligen "Traffic" ermöglicht. Zusätzlich kann, wie aus Fig. 4 deutlich wird, anhand des traffics eine lastabhängige Skalierung des Schnittstellenspeichers 11' erfolgen. Dies wird in Fig. 4 durch die mögliche Vervielfältigung des mit dem Bezugszeichen 11' versehenen Bereiches dargestellt.

Dies bedeutet, daß der Schnittstellenserver 7 in Abhängigkeit von der anstehenden Last die eingehenden Anfragen entsprechend geschickt in die Warteschlange 11 bzw. 11' einreiht und bedarfsweise weitere Prozesse also parallele Warteschlangen 11' aktiviert, die parallel abgearbeitet werden können. Hierzu können innerhalb der neutralen Zone 5 auch mehrere Schnittstellenserver 7, 7' bzw. Serverbereiche vorgesehen sein, die je nach Last aktiviert werden. Die Laststeuerung wird dabei entweder vom Web-Server 10 oder von einem Modul der äußeren Firewall 4 übernommen bzw. einem Laststeuerungsmodul 26 des Schnittstellenservers 7.

Das vorbeschriebene Lastmanagement wird vorteilhafterweise gemäß Fig. 6 durch eine entsprechende Laststeuerung auch im Bereich des internen Netzes 2 unterstützt.

So können in Abhängigkeit von der anfallenden Last mehrere innere Server 12, 12' aktiviert oder gesperrt werden und zusätzliche Datenbankanwendungen 15 zur Bearbeitung der eingehenden Nachfrage im Bereich des internen Netzes 2 aktiviert werden.

Hierbei ist es hilfreich, das gesamte Transaktionsinterface 3 mit einer durchgängigen CORBA-BUS-Architektur zu versehen, so daß jeder Abfrage eine oder mehrere Serverprozesse zugeordnet werden können.

Der auf Seiten des internen Netzes 2 agierende innere Server 12 ist hierzu mit einer CORBA-Schnittstelle 13 versehen.

Die im System eingesetzten inneren und äußeren Firewalls 4 und 6 können vollkommen herkömmliche Softwareprodukte sein. Der CORBA-Bus ermöglicht im übrigen auf Seiten des internen Netzes die Zusammenschaltung verschiedener Betriebssysteme wie Windows, NT oder Unix.

Die oben beschriebene spezielle Architektur des Transaktionsinterfaces 3 gestattet es, die im Zusammenhang mit einem wirksamen Vertragsschluß im Bereich des e-commerce erforderlichen Mindestanforderungen zu erfüllen. So kann eine über den Web-Server 10 an den Schnittstellenserver 7 übermittelte Anfrage zunächst dahingehend überprüft werden, ob es sich um eine Vertragsanfrage handelt. Für den Fall, daß es sich um eine derartige Anfrage handelt, kann ein sogenanntes auf den Schnittstellenserver 7 angelegtes Vertragsmodul vor der Weiterbearbeitung zunächst eine Bestätigungsanfrage an den externen Nutzer richten und erst im Falle, daß über den Web-Server 10 diese Bestätigung eingeht, eine Weiterbearbeitung wie oben beschrieben erfolgen.

Der Schnittstellenserver 7 ist darüber hinaus mit einem Logging-Modul versehen, das sämtliche Transaktionen des Transaktionsinterfaces 3 protokolliert. Hierdurch können sämtliche Prozesse ständig von einem Administrator überwacht und gegebenenfalls Fehlfunktionen oder Mißbrauchversuche sofort aufgedeckt werden.

Der Administrator sitzt ausschließlich im Bereich des internen Netzes 2. Die Konfiguration des Transaktionsinterfaces kann nur von hier erfolgen.

Somit ist ein Verfahren und ein Transaktionsinterface 3 zum gesicherten Datenaustausch zwischen zwei unterscheidbaren Netzen 1, 2 gegeben, das bei vollständiger Entkopplung der Netze 1 und 2 mit einer hohen Performance arbeitet und einen Mißbrauch von außen wie von innen unmöglich erscheinen läßt.

### BEZUGSZEICHENLISTE

- 1: externes Netz
- 2: internes Netz
- 3: Transaktionsinterface
- 4: äußere Firewall
- 5: neutrale Zone
- 6: innere Firewall
- 7: Schnittstellenserver
- 10: externer Server
- 11: Schnittstellenspeicher
- 12, 12', 12'': innerer Server
- 13: CORBA-Schnittstelle
- 14: Netzwerkserver
- 15: Datenbankanwendung
- 17: externer Nutzer
- 20: Client-Interface
- 21: Begrüßungsmodul
- 22, 22': Warteschlange
- 23: Authentikationsmodul
- 24: Authentikationsservice
- 25: Sitzungsprotokoll
- 26: Laststeuerungsmodul

## Patentansprüche

1. Verfahren zum gesicherten Datenaustausch zwischen einem externen und einem internen Netz (1 und 2) über ein Transaktionsinterface (3) hinweg, bei dem ein externer Nutzer vorbestimmte Datentransaktionen innerhalb des internen Netzes (2) vornehmen kann, wobei das Transaktionsinterface (3)
- ein Portal im externen Netz (1),
- eine in Zugriffsrichtung dahinterliegende neutrale Zone (5) mit wenigstens
- einem Schnittstellenserver (7) und
- einem Schnittstellenspeicher (11),
- sowie einen inneren Server (12), der bereits innerhalb des internen Netzes (2) angeordnet ist,
umfaßt,
**dadurch gekennzeichnet,**
- **daß** Abfragen externer Nutzer (17), die eine Datentransaktion innerhalb des internen Netzes (2) vom Schnittstellenserver (7) aufbereitet und in definierter Form im Schnittstellenspeicher (11) zwischengespeichert werden und
- der Schnittstellenspeicher (11) ausschließlich vom inneren Server (12) in definierter Frequenz abgefragt wird, sowie
- die vollständige Bearbeitung einschließlich einer Nutzerauthentikation innerhalb des internen Netzes (2) erfolgt.

2. Verfahren nach Anspruch 1, **dadurch gekennzeichnet, daß** folgende Schritte durchlaufen werden;
- etwaig über das Portal eingegebene Nutzeranfragen werden vom Schnittstellenserver (7), der innerhalb der neutralen Zone (5) angeordnet ist, ausgelesen und ggf. quittiert,
- wobei diese etwaige Quittierung an den Nutzer übermittelt wird,
- der Schnittstellenserver (7) überprüft die Zulässigkeit der Anfrage anhand eines Vergleichs mit einer Menge vorbestimmter zulässiger Anfragen und deren semantische Korrektheit, wobei im Fehlerfalle die Anfrage abgewiesen und ansonsten wie folgt weiter bearbeitet wird
- im Falle der Weiterbearbeitung stellt der Schnittstellenserver (7) die Anfrage in eine Warteschlange (22, 22'), die innerhalb des Schnittstellenspeichers (11) angelegt ist,
- diese Warteschlange (22, 22') wird in einer definierten Frequenz vom inneren Server (12) abgefragt,
- wobei auf diese Abfrage hin eine Übermittlung der aufbereiteten Anfrage in das interne Netz (2) erfolgt,
- wobei dann die vollständige Bearbeitung einschließlich der Autentikation des Nutzers (17) im internen Netz (2) erfolgt,
- das Ergebnis an den Schnittstellenserver (7) zurückgegeben wird und
- nach einer Überprüfung, ob Ergebnis und Abfrage in Einklang stehen,
- bejahendenfalls eine Antwort an den Nutzer (17) ausgegeben wird.

3. Verfahren nach Anspruch 1 oder 2, **dadurch gekennzeichnet, daß** in der neutralen Zone (5) zusätzlich ein externer Server (10), vorzugsweise ein Web-Server, angeordnet ist, wobei zumindest ein Teil der Nutzeranfragen über diesen externen Server (10) an den Schnittstellenserver (7) übermittelt werden, wobei vorzugsweise einmal in der Warteschlange (22, 22') des Schnittstellenspeichers (11) aufgenommene Abfragen bis zur vollständigen Abarbeitung oder bis zu einem definierten Zeitablauf resistent gespeichert werden

4. Verfahren nach einem der vorhergehenden Ansprüche, **dadurch gekennzeichnet, daß** in Abhängigkeit von der Anzahl und/oder der Mächtigkeit der Nutzerabfragen parallele Prozesse innerhalb des Schnittstellenservers (7) und/oder inneren Servers (12) freigegeben oder deaktiviert werden.

5. Verfahren nach Anspruch 4, **dadurch gekennzeichnet, daß** innerhalb der neutralen Zone (5) mehrere Schnittstellenserver (7) angeordnet sind, die je nach Anzahl und/oder Mächtigkeit der Nutzeranfragen aktiviert oder deaktiviert werden, wobei die hierzu erforderliche Laststeuerung mittels des externen Servers (10) und/oder mittels eines Laststeuerungsmoduls der äußeren Firewall (4) erfolgt.

6. Verfahren nach Anspruch 4 und 5, **dadurch gekennzeichnet, daß** innerhalb des internen Netzes (2) mehrere innere Server (12) angeordnet sind, die je nach Anzahl und/oder Mächtigkeit der Nutzeranfragen aktiviert oder deaktiviert werden, wobei die hierzu erforderliche Laststeuerung mittels des Schnittstellenservers (7) und/oder mittels eines Laststeuerungsmoduls der inneren Firewall (6) erfolgt.

7. Verfahren nach einem der vorhergehenden Ansprüche, **dadurch gekennzeichnet, daß** die Nutzerabfragen vor Ihrer Übermittlung in die innere Zone (2) innerhalb der neutralen Zone (5) verschlüsselt werden, wobei vorzugsweise die die zur Verschlüsselung jeweils eingesetzten Schlüssel eine individuell vorbestimmbare Lebensdauer haben.

8. Verfahren nach einem der vorhergehenden Ansprüche, **dadurch gekennzeichnet, daß** die Authentikation des Nutzers (17) unabhängig von der sonstigen Bearbeitung der Nutzerabfrage erfolgt.

9. Verfahren nach Anspruch 8, **dadurch gekennzeichnet. daß** die zur Authentikation des Nutzers (17) folgende Schritte durchlaufen werden;
- Separierung einer Nutzer-ID und eines Nutzerpasswortes aus der Nutzerabfrage in der neutralen Zone (5),
- auf Anfrage des inneren Servers (12) Übermittlung der Nutzer-ID an das interne Netz (2),
- Verschlüsselung der Nutzer ID im inneren Netz (2) unter Verwendung des im inneren Netz (2) zu dieser Nutzer-ID abgelegten Passwortes,
- und Rückgabe der solcherart verschlüsselten Nutzer ID in die neutrale Zone (5),
- Entschlüsselung der aus dem inneren Netz(2) zurückgegebenen Nutzer-ID unter Verwendung des vom Nutzer (17) eingegebenen und in der neutralen Zone (5) zwischengespeicherten Passwortes,
- Vergleich der entschlüsselten Nutzer ID und der vom Nutzer eingegebenen, wobei im Falle der Übereinstimmung die Authentizi- Authentizität des Nutzers bebestätigt und andernfalls verneint wird und Abhängigkeit hiervon die Nutzerabfrage weiter bearbeitet wird oder nicht.

10. Transaktionsinterface zum gesicherten Datenaustausch zwischen einem externen und einem internen Netz (1 und 2), bei dem ein externer Nutzer (17) vorbestimmte Datentransaktionen innerhalb des internen Netzes (2) auslösen kann und hierzu das Transaktionsinterface (3)
- eine neutrale Zone (5), die in Zugriffsrichtung hinter einem Portal im externen Netz (1) angeordnet ist und wenigstens einen Schnittstellenserver (7), sowie
- wenigstens einen Schnittstellenspeicher (11) aufweist,
- wenigstens einem inneren Server (12), der innerhalb des internen Netz (2) angeordnet ist, umfaßt,
**dadurch gekennzeichnet,**
- **daß** innerhalb des Schnittstellenspeichers (11) eine Warteschlange (22, 22') zur Zwischenspeicherung von Nutzeranfragen angelegt ist,
- die in einer definierten Frequenz vom inneren Server (12) abfragbar ist und
- **daß** nach Übermittlung der entsprechend aufbereiteten Anfragen an den inneren Server (12) die vollständige Bearbeitung der Anfragen, einschließlich der Nutzerauthentikation, innerhalb des internen Netzes (2) vorgesehen ist.

11. Transaktionsinterface nach einem der Anspruch 15 bis 17, **dadurch gekennzeichnet, daß** innerhalb der neutralen Zone (5) zusätzlich ein externer Server (10) vorgesehen ist, der aus dem externen Netz(1) unmittelbar oder mittelbar über den Schnittstellenserver (7) zur Bearbeitung von Nutzerabfragen ansprechbar ist.

12. Transaktionsinterface nach Anspruch 10 oder 11, **dadurch gekennzeichnet, daß** die Konfiguration des Transaktionsinterfaces (3) oder in der neutralen Zone (5) abgelegte Daten in vorgebbaren Zeitabständen aus dem internen Netz (2) selbsttätig überschrieben wird.

13. Transaktionsinterface nach einem der Ansprüche 10 bis 12, **dadurch gekennzeichnet, daß** der Schnittstellenspeicher (11) derart skalierbar ist, daß aus dem externen Netz (1) eingehende Nutzerabfragen je nach Umfang und Dringlichkeit entsprechend in die Warteschlange (22, 22') des Schnittstellenservers (7) einsortiert und gegebenenfalls zusätzliche Prozesse aktivierbar sind.

14. Transaktionsinterface nach einem der Ansprüche 10 bis 13, **dadurch gekennzeichnet, daß** innerhalb der neutralen Zone (5) mehrere Netzwerkrechner angeordnet sind, auf denen jeweils ein Schnittstellenserver (7) angeordnet ist, wobei in Abhängigkeit von der Anzahl und/oder Mächtigkeit der Nutzeranfragen zusätzliche Server (7) aktiviert oder deaktiviert werden können, wobei die Laststeuerung vom externen Server (10) und/oder der äußeren Firewall (4) erfolgt, wobei vorzugsweise die im Bereich des internen Netzes (2) angeordneten Netzwerkrechner jeweils mit einem inneren Server (12) versehen sind, die je nach Umfang und Mächtigkeit der Nutzeranfragen aktivierbar oder deaktivierbar sind, wobei die Laststeuerung von der inneren Firewall (6) bzw. einem oder mehreren Schnittstellenservern (7) übernommen wird.

15. Transaktionsinterface nach einem der vorhergehenden Ansprüche 10 bis 14, **dadurch gekennzeichnet, daß** der Schnittstellenserver (7) vor der Einstellung bestimmter Nutzeranfragen eine Bestätigungsanfrage an den Nutzer (17) übermittelt und erst nach Eingang der Bestätigung die Weiterbearbeitung erfolgt.

## Claims

1. Method for secure data exchange between an external network (1) and an internal network (2) by way of a transaction interface (3), in which an external user can undertake predetermined data transactions within the internal network (2), wherein the transaction interface (3) comprises
- a portal in the external network (1),
- a neutral zone (5) disposed therebehind in access direction with at least
- one interface server (7) and
- one interface memory (11),
- as well as an inner server (12) which is already arranged within the internal network (2),
**characterised in that**
- requests of an external user (17), which are for a data transaction within the internal network (2), are prepared by the interface server (7) and intermediately stored in defined form in the interface memory (11) and
- the interface memory (11) exclusive of the inner server (12) is interrogated at a defined frequency as well as
- complete processing inclusive of a user authentication takes place within the internal network (2).

2. Method according to claim 1, **characterised in that** the following steps are run through:
- possible user requests input by way of the portal are read out and optionally acknowledged by the interface server (7), which is arranged within the neutral zone (5),
- wherein this possible acknowledgement is communicated to the user,
- the interface server (7) checks the reliability of the request on the basis of a comparison with a number of predetermined allowable requests and the semantic correctness thereof, wherein in the case of error the request is refused and otherwise further processed as follows,
- in the case of further processing the interface server (7) places the request in a waiting loop (22, 22') located within the interface memory (11),
- this waiting loop (22, 22') is interrogated at a defined frequency by the inner server (12),
- wherein, on this interrogation, a communication of the prepared request to the internal network (2) takes place
- wherein then complete processing inclusive of authentication of the user (17) takes place in the internal network (2),
- the result is fed back to the interface server (7) and,
- after a check whether result and interrogation are in agreement,
- in the case of an affirmative answer a response is issued to the user (17).

3. Method according to claim 1 or 2, **characterised in that** an external server (10), preferably a Web server, is additionally arranged in the neutral zone (5), wherein at least a part of the user requests are communicated by way of this external server (10) to the interface server (7), wherein preferably requests received once in the waiting loop (22, 22') of the interface memory (11) are resistantly stored until complete working down or until a defined expiry of time.

4. Method according to one of the preceding claims, **characterised in that** parallel processes are freed or deactivated within the interface server (7) and/or inner server (12) depending on the number and/or the potency of the user interrogations.

5. Method according to claim 4, **characterised in that** several interface servers (7) which are activated or deactivated according to the number and/or potency of the user requests are arranged within the neutral zone (5), wherein the load control required for this purpose is carried by means of the external server (10) and/or by means of a load control module of the outer firewall (4).

6. Method according to claim 4 and 5, **characterised in that** several internal servers (12) which are activated or deactivated according to the number and/or potency of the user requests are arranged within the internal network (2), wherein the load control required for this purpose is carried out by means of the interface server (7) and/or by means of a load control module of the inner firewall (6).

7. Method according to one of the preceding claims, **characterised in that** the user requests before communication thereof to the inner zone (2) are coded within the neutral zone (5), wherein preferably the code respectively used for the coding has an individually predeterminable life span.

8. Method according to one of the preceding claims, **characterised in that** authentication of the user (17) takes place independently of the further processing of the user request.

9. Method according to claim 8, **characterised in that** the following steps are run through for authentication of the user (17):
- separation of a user ID and a user password for the user request in the neutral zone (5),
- at the request of the inner server (12), communication of the user ID to the internal network (2),
- coding of the user ID in the internal network (2) with use of the password filed in the inner network (2) for this user ID,
- and return of the user ID coded in such a way to the neutral zone (5),
- decoding of the user ID, which is fed back from the inner network (2), with use of the password input by the user (17) and intermediately stored in the neutral zone (5), and
- comparison of the decoded user ID and that input by the user, wherein authentication of the user is confirmed in the case of agreement and otherwise denied and in dependence thereon the user request is further processed or not.

10. Transaction interface for secure data exchange between an external network (1) and an internal network (2), in which an external user (17) can trigger predetermined data transactions within the internal network (2) and for this purpose the transaction interface (3) comprises
- a neutral zone (5), which is arranged behind a portal in the external network (1) in the access direction and comprises at least one interface server (7) as well as
- at least one interface memory (11), and
- at least one inner server (12) arranged within the internal network (2),
**characterised in that**
- a waiting loop (22, 22') for intermediate storage of user requests is located within the interface memory (11),
- which can be interrogated at a defined frequency by the inner server (12), and
- after communication of the correspondingly prepared requests to the inner server (12) complete processing of the requests inclusive of user authentication is provided within the internal network (2).

11. Transaction interface according to one of claims 15 to 17, **characterised in that** an external server (10) which is addressible from the external network (1) directly or indirectly by way of the interface server (7) for processing user requests is additionally provided within the neutral zone (5).

12. Transaction interface according to claim 10 or 11, **characterised in that** the configuration of the transaction interface (3) or data filed in the neutral zone (5) is automatically transferred at predeterminable intervals in time from the internal network (2).

13. Transaction interface according to one of claims 10 to 12, **characterised in that** the interface memory (11) is scalable in such a manner that user requests entering from the external network (1) are appropriately classified in the waiting loop (22, 22') of the interface server (7) according to scope and urgency and additional processes are optionally activatable.

14. Transaction interface according to one of claims 10 to 13, **characterised in that** several network computers at each of which a respective interface server (7) is arranged are arranged within the neutral zone (5), wherein additional servers (7) can be activated or deactivated depending on the number and/or potency of the user requests, wherein the load control is carried out by the external server (10) and/or the outer firewall (4), wherein preferably the network computers arranged in the region of the internal network (2) are each provided with a respective inner server (12), which inner servers are activatable or deactivatable according to the scope and potency of the user requests, and wherein the load control is carried out by the inner firewall (6) or one or more interface servers (7).

15. Transaction interface according to one of the preceding claims 10 to 14, **characterised in that** the interface server (4) before setting specific user requests communicates a confirmation request to the user (17) and further processing takes place only after entry of a confirmation.

## Revendications

1. Procédé pour l'échange de données sécurisé entre un réseau externe et un réseau interne (1 et 2) au moyen d'une interface de transaction (3), dans lequel un utilisateur externe peut effectuer des transactions de données prédéfinies à l'intérieur du réseau (2) interne, l'interface de transaction (3) comprenant
- un portail dans le réseau (1) externe,
- une zone (5) neutre située derrière dans la direction d'accès avec au moins
- un serveur interface (7) et
- une mémoire interface (11),
- un serveur (12) interne, qui est disposé déjà à l'intérieur du réseau (2) interne,
**caractérisé en ce que**
- les interrogations d'utilisateurs (17) externes, qui préparent une transaction de données sont traitées à l'intérieur du réseau (2) interne venant du serveur interface (7) et sont stockées provisoirement dans une forme définie dans la mémoire interface (11) et
- la mémoire interface (11) est interrogée exclusivement par le serveur (12) interne dans une fréquence définie, et
- le traitement complet, y compris une authentification de l'utilisateur, s'effectue à l'intérieur du réseau interne (2).

2. Procédé selon la revendication 1, **caractérisé en ce que** les étapes suivantes sont effectuées :
- les demandes d'utilisateur entrées éventuellement par le portail sont extraites et éventuellement acquittées par le serveur interface (7) qui est disposé à l'intérieur de la zone (5) neutre,
- cet éventuel acquittement étant transmis à l'utilisateur,
- le serveur interface (7) contrôle la fiabilité de la demande à l'aide d'une comparaison avec une quantité de demandes autorisées prédéfinies et leur caractère correct au plan de la sémantique, la demande étant refusée en cas d'erreur et étant retraitée autrement de la façon suivante
- dans le cas du retraitement, le serveur interface (7) envoie la demande dans une file d'attente (22, 22'), qui est établie à l'intérieur de la mémoire interface (11),
- cette file d'attente (22, 22') est interrogée dans une fréquence définie par le serveur (12) interne,
- une transmission de la demande traitée au réseau (2) interne s'effectuant dans le sens de cette demande,
- le traitement complet, y compris l'authentification de l'utilisateur (17), s'effectuant alors dans le réseau (2) interne,
- le résultat est renvoyé au serveur interface (7) et
- après une vérification pour savoir si le résultat et l'interrogation sont en harmonie,
- une réponse est envoyée à l'utilisateur (17) en cas d'affirmation.

3. Procédé selon la revendication 1 ou 2, **caractérisé en ce que** en supplément un serveur (10) externe, de préférence un serveur Web, est disposé dans la zone (5) neutre, au moins une partie des demandes d'utilisateurs étant transmise au moyen de ce serveur (10) externe au serveur interface (7), des interrogations réceptionnées de préférence une fois dans la file d'attente (22, 22') de la mémoire interface (11) étant stockées de façon résistante jusqu'au traitement complet ou jusqu'à un écoulement de temps défini.

4. Procédé selon l'une quelconque des revendications précédentes, **caractérisé en ce que**, en fonction du nombre et/ou du volume des interrogations des utilisateurs, des processus parallèles sont autorisés ou désactivés à l'intérieur du serveur interface (7) et/ou du serveur (12) interne.

5. Procédé selon la revendication 4, **caractérisé en ce que** à l'intérieur de la zone (5) neutre sont disposés plusieurs serveurs interface (7), qui sont activés ou désactivés en fonction du nombre et/ou du volume des demandes d'utilisateurs, la commande de charge nécessaire à cet effet s'effectuant au moyen du serveur (10) externe et/ou au moyen d'un module de commande de charge du firewall (4) externe.

6. Procédé selon la revendication 4 ou 5, **caractérisé en ce que** à l'intérieur du réseau (2) interne sont disposés plusieurs serveurs (12) internes qui sont activés ou désactivés en fonction du nombre et/ou du volume des demandes d'utilisateurs, la commande de charge nécessaire à cet effet s'effectuant au moyen du serveur interface (7) et/ou au moyen d'un module de commande de charge du firewall (6) interne.

7. Procédé selon l'une quelconque des revendications précédentes, **caractérisé en ce que** les interrogations d'utilisateur sont codées avant leur transmission dans la zone (2) intérieure à l'intérieur de la zone (5) neutre, les codes utilisés respectivement pour le codage ayant de préférence une durée de vie pouvant être prédéfinie individuellement.

8. Procédé selon l'une quelconque des revendications précédentes, **caractérisé en ce que** l'authentification de l'utilisateur (17) s'effectue indépendamment du traitement ultérieur de l'interrogation d'utilisateur.

9. Procédé selon la revendication 8, **caractérisé en ce que** les étapes suivant l'authentification de l'utilisateur (17) sont exécutées ;
- séparation d'une ID utilisateur et d'un mot de passe utilisateur de l'interrogation d'utilisateur dans la zone (5) neutre, à la demande du serveur (12) interne transmission de l'ID utilisateur au réseau (2) interne,
- codage de l'ID utilisateur dans le réseau (2) interne avec l'utilisation du mot de passe déposé dans le réseau (2) interne pour cette ID utilisateur,
- et renvoi de l'ID utilisateur codée de cette façon dans la zone (5) neutre,
- décodage de l'ID utilisateur renvoyée à partir du réseau (2) interne avec l'utilisation du mot de passe entré par l'utilisateur (17) et stocké provisoirement dans la zone (5) neutre,
- comparaison de l'ID utilisateur décodée et de l'ID entrée par l'utilisateur, l'authenticité de l'utilisateur étant confirmée en cas de concordance et étant autrement refusée et l'interrogation d'utilisateur étant ensuite traitée ou non en fonction du résultat.

10. Interface de transaction pour l'échange de données sécurisé entre un réseau externe et un réseau interne (1 et 2), dans lequel un utilisateur (17) externe peut déclencher des transactions de données prédéfinies à l'intérieur du réseau (1) externe et comprend à cet effet l'interface de transaction (3),
- une zone (5) neutre, qui est disposée dans la direction d'accès derrière un portail dans le réseau (1) externe, et présente au moins un serveur interface (7), ainsi qu'au moins une mémoire interface (11),
- au moins un serveur (12) interne qui est disposé à l'intérieur du réseau (2) interne ;
**caractérisée en ce que**
- une file d'attente (22, 22') pour le stockage provisoire des demandes d'utilisateurs est établie à l'intérieur de la mémoire interface (11),
- qui peut être interrogée dans une fréquence définie par le serveur (12) interne et,
- **en ce que**, après la transmission des demandes traitées de façon appropriée au serveur (12) interne, il est prévu le traitement complet des demandes, y compris l'authentification de l'utilisateur, à l'intérieur du réseau (2) interne.

11. Interface de transaction selon l'une quelconque des revendications 15 jusqu'à 17, **caractérisée en ce que** à l'intérieur de la zone (5) neutre, il est prévu en supplément un serveur (10) externe, qui peut être contacté à partir du réseau (1) externe directement ou indirectement au moyen du serveur interface (7) pour le traitement d'interrogations d'utilisateurs.

12. Interface de transaction selon la revendication 10 ou 11, **caractérisée en ce que** la configuration de l'interface de transaction (3) ou des données déposées dans la zone (5) neutre sont écrasées automatiquement à des intervalles prédéfinissables à partir du réseau (2) interne.

13. Interface de transaction selon l'une quelconque des revendications 10 à 12, **caractérisée en ce que** la mémoire interface (11) peut être graduée de telle sorte que des interrogations d'utilisateurs arrivant du réseau (1) externe sont entrées et classées de façon appropriée dans la file d'attente (22, 22') du serveur interface (7) selon le nombre et l'urgence et le cas échéant des processus supplémentaires peuvent être activés.

14. Interface de transaction selon l'une quelconque des revendications 10 à 13, **caractérisée en ce que** à l'intérieur de la zone (5) neutre sont disposés plusieurs ordinateurs de réseau, sur chacun desquels est disposé un serveur interface (7), des serveurs (7) supplémentaires pouvant être activés ou désactivés en fonction du nombre et/ou du volume des demandes d'utilisateurs, la commande de charge s'effectuant à partir du serveur (10) externe et/ou du firewall (4) externe, les ordinateurs de réseau disposés dans la zone du réseau (2) interne étant pourvus chacun de préférence d'un serveur (12) interne, lesquels peuvent être activés ou désactivés en fonction du nombre et du volume des demandes d'utilisateurs, la commande de charge étant prise en charge par le firewall (6) interne et un ou plusieurs serveurs interface (7).

15. Interface de transaction selon l'une quelconque des revendications précédentes 10 à 14, **caractérisée en ce que** le serveur interface (7) transmet une demande de confirmation à l'utilisateur (17) avant le placement de certaines demandes d'utilisateurs et le traitement ultérieur intervient seulement après l'arrivée de la confirmation.
